# EUROPEAN PATENT APPLICATION

(11) **EP 1 837 780 A2**
(43) Date of publication of application: **26.09.2007**
(21) Application number: 07005587.6
(22) Date of filing: 19.03.2007
(51) Int. Cl.: G06F 17/30

(54) **File operation control device, system, method, and program**

(30) Priority: 20.03.2006 JP 2006077311
(71) Applicant: NEC Corporation, Minato-ku Tokyo (JP)
(72) Inventor: Nagano, Hiroaki, Minato-ku, Tokyo (JP)
(74) Representative: Glawe, Delfs, Moll

(57) **Abstract**

The present invention provides a file operation control device capable of using an extended function existing in a file system via a network. The device has: virtual namespace presenting section that presents, as a virtual namespace, an operation for an extended function existing in a file system; file system operation receiving section that receives an operation existing in the virtual namespace presented by the virtual namespace presenting means; file system extension operation converting section that converts the operation existing in the virtual namespace received by the file system operation receiving means to the operation for the extended function; and file system extension operating section that performs a process on the operation for the extended function converted by the file system extension operation converting means.

## Description

### BACKGROUND OF THE INVENTION

### Field of the Invention

The present invention relates to a file operation control device, system, method, and a program for controlling an operation performed when a client computer uses a function existing in a file system. More particularly, the invention relates to a file operation control device, system, method, and program enabling a client computer to use an extended function existing in a file system via a network.

### Description of the Related Art

A file system in recent years has various functions, not only simple data storage and retention of an access right setting but also extended functions such as a complicated ACL (Access Control List) function, an encryption attribute function, and a falsification prevention support function.

In the case of using the extended function in the file system via a network, a method of extending a communication protocol between a client and a server or changing the created meaning of an existing function is employed.

When a communication protocol is extended, both a client and a server must have the function needed to use a communication protocol. Also under the environment of a standard network file system, the operating environment is limited, and there is a problem such that additional development cost is necessary for each client.

In many cases, a standard application interface is extended to use the extended function. Consequently, a program using the extended function also has a problem that development cost is necessary.

When the meaning of an existing function is changed, there is a method, for example, that an attribute normally used as file generation date is changed to an attribute used as file storage limitation or the like.

In the above method, the standard communication protocol is used without modification. Consequently, the problems of cost do not occur. However, since the meaning of an existing attribute or the like is changed in a standard file system, even if the extended functions are not used, a problem may occur in the compatibility of a program, or creation of the meaning of an operation.

Document 1 (Japanese Patent Application Laid-Open No. 2004-280283) discloses a distributed file system (DFS) in which a centralized file system can be accessed by using a protocol. A plurality of DFS servers storing distributed files is provided in a network. At least one of the DFS servers has a gateway for converting a protocol for accessing the centralized file system to a protocol capable of accessing distributed files so that the distributed files are accessed. In this way, without changing anything on the client side, distributed file systems (DFS) can be accessed using a conventional protocol such as NFS or CIFS.

Document 2 (Japanese Patent Application Laid Open No. 2004-334479) discloses an ID conversion system for converting an ID (identification information) on a client side to the ID of a file system to be accessed by the client. The ID conversion system has an ID conversion file system for storing information of a registered namespace, a namespace on a client side defining information of a namespace to which the client belongs, and a namespace on a file system side defining information of the ID of a namespace held by a file system. The ID conversion system further includes: section that receives the ID before conversion, client information and information of a file system to be accessed as information on a file access from a client; section that detects the presence or absence of a setting of access permission to a file system to be accessed of the client with reference to the ID conversion file system; means, when the access permission is set, for converting an ID belonging to a namespace on the client side to a name based on the input ID before conversion; section that converts the name converted from the ID to an ID belonging to a namespace on a file system side; and section that sends back the converted ID to the client. With this configuration, a file system can be shared among different systems.

Document 3 (Japanese Patent Application Laid Open No. 5-241934) discloses a server-client computer system including one or more server computers and one or more client computers sharing file service provided by the server computers. At least one of the server computers has file management section that receives all of file access requests from the clients. The file management means has: section that manages all files of the computer system in one tree structure; section that checks a file system of a server computer, having a file requested to be accessed by any of the clients based on the tree structure, and issuing an access request to the file system of the server computer; and section that transmits data sent back from the file system of the server computer in which the access-requested-file exists to the client which has sent the access request. With this configuration, a client can handle all of files as the same file irrespective of actual arrangement states of files managed in the tree structure.

Document 1 discloses a distributed file system in which, without changing the client side, distributed file systems (DFS) can be accessed by using a conventional protocol such as NFS or CIFS. However, it was not taken in consideration to handle as a virtual namespace an operation for an extended function existing in a file system and use the extended function existing in the file system via a network.

Although document 2 discloses the ID conversion system in which a file system can be shared among different systems but does not use an extended function existing in the file system via a network.

Document 3 discloses a server-client computer system in which a client can handle all files as the same file regardless of actual states of files managed in the tree structure, but does not use an extended function existing in a file system via a network.

### SUMMARY OF THE INVENTION

In view of the foregoing, the present invention aims to provide a file operation control device, a file operation control system, a file operation control method, and a file operation control program capable of using an extended function existing in a file system via a network.

To achieve the object, the present invention has the following features.

A file operation control device for controlling an operation performed when a client computer uses an extended function existing in a file system via a network, includes: a virtual namespace presenting section that presents, as a virtual namespace, an operation for an extended function existing in the file system to the client computer; a file system operation receiving section that receives an operation existing in the virtual namespace presented by the virtual namespace presenting section from the client computer; a file system extension operation converting section that converts the operation existing in the virtual namespace received from the file system operation receiving section to the operation for the extended function; and a file system extension operating section that performs a process on the operation for the extended function converted by the file system extension operation converting section.

The file operation control device further includes: a normal namespace presenting section that presents, as a normal namespace, an operation for a normal function existing in the file system to the client computer; and a file system general operation section that processes an operation existing in the normal namespace presented by the normal namespace presenting section. The file system operation receiving section receives an operation existing in the normal namespace presented by the normal namespace presenting section to the client computer. The file system general operation section performs a process on the operation existing in the normal namespace received by the file system operation receiving section.

The file operation control device further includes: a virtual namespace operating section that receives an operation existing in a virtual namespace; and a normal namespace operating section that receives an operation existing in a normal namespace. When an operation received from the client computer is determined as an operation existing in the virtual namespace presented by the virtual namespace presenting section, the file system operation receiving section assigns the received operation to the virtual namespace operating section. When the operation received from the client computer is determined as an operation existing in the normal namespace presented by the normal namespace presenting section, the file system operation receiving section assigns the received operation to the normal namespace operating section.

In the file operation control device, the file system operation receiving section determines that an operation received from the client computer is either an operation existing in a virtual namespace or an operation existing in a normal namespace based on an identifier.

The present invention also provides a file operation control system where at least one client computer is connected via a network with a file operation control device for controlling an operation performed when the client computer uses an extended function existing in a file system. The file operation control device includes: a virtual namespace presenting section that presents, as a virtual namespace, an operation for an extended function existing in the file system to the client computer; a file system operation receiving section that receives an operation existing in the virtual namespace presented by the virtual namespace presenting section from the client computer; a file system extension operation converting section that converts the operation existing in the virtual namespace received by the file system operation receiving section to an operation for the extended function; and a file system extension operating section that performs a process on the operation for the extended function converted by the file system extension operation converting section.

In the file operation control system, the file operation control device further includes: a normal namespace presenting section that presents, as a normal namespace, an operation for a normal function existing in the file system to the client computer; and a file system general operation section that performs a process on an operation existing in the normal namespace presented by the normal namespace presenting section. The file system operation receiving section receives an operation existing in the normal namespace presented by the normal namespace presenting section to the client computer. The file system general operation section performs a process on the operation existing in the normal namespace received by the file system operation receiving section.

In the file operation control system, the file operation control device further includes: a virtual namespace operating section that receives an operation existing in a virtual namespace; and a normal namespace operating section that receives an operation existing in a normal namespace. When an operation received from the client computer is determined as an operation existing in a virtual namespace presented by the virtual namespace presenting section, the file operation control device assigns the received operation to the virtual namespace operating section. When the operation received from the client computer is determined as an operation existing in the normal namespace presented by the normal namespace presenting section, the file operation control device assigns the received operation to the normal namespace operating section.

In the file operation control system, the file operation control device determines that an operation received from the client computer is either an operation existing in a virtual namespace or an operation existing in a normal namespace based on an identifier.

The present invention provides a file operation control method in a file operation control device for controlling an operation performed when a client computer uses an extended function existing in a file system via a network, including: a virtual namespace presenting step of presenting, as a virtual namespace, an operation for an extended function existing in the file system to the client computer; a file system operation receiving step of receiving an operation existing in the virtual namespace presented in the virtual namespace presenting step from the client computer; a file system extension operation converting step of converting the operation existing in the virtual namespace received in the file system operation receiving step to the operation for the extended function; and a file system extension operating step of performing a process on the operation for the extended function converted in the file system extension operation converting step.

The file operation control method is characterized in that the file operation control device performs: a normal namespace presenting step of presenting, as a normal namespace, an operation for a normal function existing in the file system to the client computer; and a file system general operation step of performing a process on an operation existing in the normal namespace presented in the normal namespace presenting step, in the file system operation receiving step, an operation existing in the normal namespace presented to the client computer in the normal namespace presenting step is received, and in the file system general operation step, a process on the operation existing in the normal namespace received in the file system operation receiving step is performed.

The file operation control method is characterized in that the file operation control device performs: a virtual namespace operating step of receiving an operation existing in a virtual namespace; and a normal namespace operating step of receiving an operation existing in a normal namespace. In the file system operation receiving step, when an operation received from the client computer is determined as an operation existing in a virtual namespace presented in the virtual namespace presenting step, an operation existing in a virtual namespace is received in the virtual namespace operating step. When the operation received from the client computer is determined as an operation existing in the normal namespace presented in the normal namespace presenting step, an operation existing in a normal namespace is received in the normal namespace operating step.

The file operation control method is characterized in that, in the file system operation receiving step, an operation received from the client computer is determined as either an operation existing in a virtual namespace or an operation existing in a normal namespace based on an identifier.

The present invention provides a computer program for a file operation control device to control an operation performed when a client computer uses an extended function existing in a file system via a network. The program makes the file operation control device perform: a virtual namespace presenting process for presenting, as a virtual namespace, an operation for an extended function existing in the file system to the client computer; a file system operation receiving process for receiving an operation existing in the virtual namespace presented by the virtual namespace presenting process from the client computer; a file system extension operation converting process for converting the operation existing in the virtual namespace received by the file system operation receiving process to the operation for the extended function; and a file system extension operating process for performing a process on the operation for the extended function converted by the file system extension operation converting process.

The computer program makes the file operation control device execute: a normal namespace presenting process of presenting, as a normal namespace, an operation for a normal function existing in the file system to the client computer; and a file system general operation process of performing a process on an operation existing in the normal namespace presented by the normal namespace presenting process. In the file system operation receiving process, an operation existing in the normal namespace presented by the normal namespace presenting process to the client computer is received. In the file system general operation process, a process on the operation existing in the normal namespace received by the file system operation receiving process is performed.

The computer program makes the file operation control device execute: a virtual namespace operating process of receiving an operation existing in a virtual namespace; and a normal namespace operating process of receiving an operation existing in a normal namespace. In the file system operation receiving process, when an operation received from the client computer is determined as an operation existing in a virtual namespace presented in the virtual namespace presenting process, an operation existing in the virtual namespace is received by the virtual namespace operating process. When the operation received from the client computer is determined as an operation existing in the normal namespace presented by the normal namespace presenting process, an operation existing in the normal namespace is received by the normal namespace operating process.

In the computer program, in the file system operation receiving process, an operation received from the client computer is determined as either an operation existing in a virtual namespace or an operation existing in a normal namespace based on an identifier.

In the file operation control device, the file operation control system, the file operation control method, and the file operation control program, an operation for an extended function existing in a file system is presented as a virtual namespace to a client computer. An operation existing in the virtual namespace presented is received from the client computer. The received operation existing in the virtual namespace is converted to an operation for an extended function, and a process is performed on the converted operation for the extended function. Consequently, the client computer can use the extended function existing in the file system via the network.

### BRIEF DESCRIPTION OF THE DRAWINGS

FIG. 1 is a diagram showing the configuration of a file operation control system according to an embodiment;
FIG. 2 is a diagram showing an internal configuration of a file server 2 as a component of the file operation control system according to the embodiment;
FIG. 3 is a diagram showing a normal namespace presented by normal namespace presenting section 22 to a client computer 1-1 and a virtual namespace presented by virtual namespace presenting section 23 to the client computer 1-1; and
FIG. 4 is a diagram showing an example of converting operation in file system extension operation converting section 27.

### DESCRIPTION OF PREFERRED EMBODIMENTS

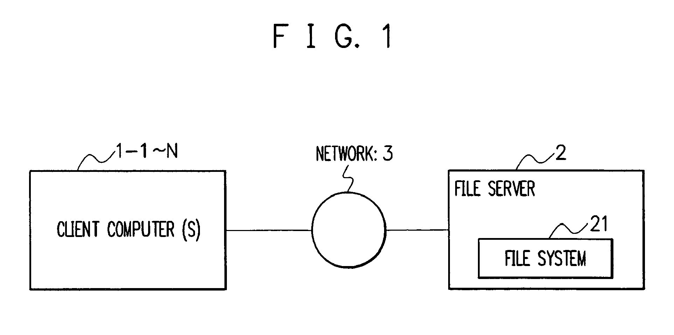

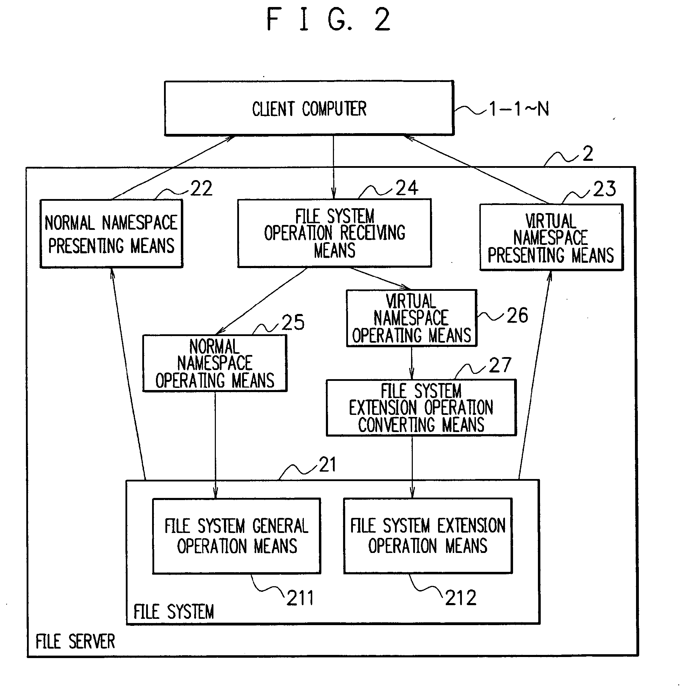

First, features of a file operation control system according to embodiments of the invention will be described with reference to FIGS. 1 and 2.

A file operation control system in the embodiments includes at least one of client computers 1-1 to 1-N (N is an arbitrary integer) and a file operation control device (corresponding to a file server 2) for controlling, via a network 3, operations performed when the client computer 1-1 uses an extended function existing in a file system 21.

The device 2 has, as shown in FIG. 2: virtual namespace presenting section 23 for presenting, as a virtual namespace, an operation for an extended function existing in the file system 21 to the client computer 1-1; file system operation receiving section 24 for receiving an operation existing in the virtual namespace presented by the virtual namespace presenting section 23 from the client computer 1-1; file system extension operation converting section 27 for converting the operation existing in the virtual namespace received from the file system operation receiving section 24 to the operation for the extended function; and file system extension operating section 212 for performing a process on the operation for the extended function converted by the file system extension operation converting section 27. With the configuration, the client computers 1-1 to 1-N can use an extended function existing in the file system 21 via the network 3. The file operation control system will be described hereinbelow with reference to the drawings.

### First Embodiment

First, the system configuration of a file operation control system in a first embodiment will be described with reference to FIG. 1.

A file operation control system connects one or a plurality of client computers 1-1 to 1-N (N is an arbitrary integer) and a file server 2 via a network 3. The network 3 is not limited to a specific configuration but any network can be applied as long as information can be transmitted/received between the client computers 1-1 to 1-N and the file server 2.

### Client Computers 1-1 to 1-N

The client computers 1-1 to 1-N perform an operation for a desired file directory existing in a file system 21 in the file server 2, using a network file system protocol.

### File Server 2

The file server 2 is provided to process the operation for the file directory existing in the file system 21, received from the client computers 1-1 to 1-N via the network 3.

When an extended function such as a new attribute operation is provided for the file server 2 in addition to the normal functions such as reading and authorizing operations stored in the file system 21, an operation for using the extended function is a new operation.

When the file system 21 and a program for using the extended function in the file system 21 exist in the same system, the extended function in the file system 21 can be directly called, so that the extended function in the file system 21 can be used without any problem.

However, in the case of using the extended function in the file system 21 via the network 3 as in the embodiment, the network file system protocol for supporting only existing operations is interposed between the program and the file system 21. Consequently, the extended function in the file system 21 cannot be called and, as a result, the extended function in the file system 21 cannot be used.

To call the extended function in the file system 21 from a client group running a plurality of kinds of operating systems (OS), a client function for operating various extended functions has to be added to the OS's.

The inventors herein have variously modified and studied the technique in order to solve the problems. As a result, the inventors achieved a configuration of the file server 2 as shown in Fig. 2 so that the client computers 1-1 to 1-N can use an extended function existing in the file system 21 via the network 3. With reference to FIG. 2, the internal configuration of the file system 2 as a component of the file operation control system of the embodiment will be described.

The file server 2 has the file system 21, a normal namespace presenting section 22, a virtual namespace presenting section 23, a file system operation receiving section 24, a normal namespace operating section 25, a virtual namespace operating section 26, and a file system extension operation converting section 27.

The file system 21 includes a file system general operation section 211 and a file system extension operation section 212. The section 211 performs a process on operations of the normal functions such as reading and authorizing operations existing in the file system 21. The section 212 performs a process on operations of an expanded function such as special attribute operations.

The section 22 presents a normal namespace corresponding to the name and structure of a file directory in the file system 21 to the client computer 1-1.

The section 23 presents a virtual namespace corresponding to the name and structure of the file directory in the file system 21 to the client computer 1-1.

The section 24 receives instructions from the client computer 1-1 and controls operations for file directories existing in the normal namespace presented from the section 22, or operations for file directories existing in the virtual namespace presented by the section 23. The section 24 assigns operations for the file directories to the section 25 or the section 26 based on a namespace of a file directory.

When an operation for a file directory existing in the normal namespace presented by the section 22 is received, the section 24 assigns the received operation to the section 25. When an operation for a file directory existing in the virtual namespace presented by the section 23 is received, the section 24 assigns the received operation to the section 26.

On receipt of an operation for a file directory existing in a normal namespace from the section 24, the section 25 activates the section 211 and, by using the section 211, performs an operation for the file directory existing in the normal namespace.

The section 26 is a means having an interface similar to that of the section 25. When an operation for a file directory existing in a virtual namespace is received from the section 24, the section 26 passes the received operation to the section 27.

On receipt of the operation from the section 26, the section 27 activates the section 212, and converts the operation for a file directory existing in the virtual namespace to a file directory operation that the section 212 handles. The converted operation for a file directory is performed using the section 212.

### Series of Operations in File Operation Control System

Referring now to FIG. 2, a series of control operations in the file operation control system will be described.

The file system 21 in the file server 2 stores files to be handled by a computer system. Files stored in the file system 21 are given names that uniquely identify a file and, in many cases, files are managed in a hierarchical namespace with a hierarchical directory or the like. The structure of a namespace is not restricted but any structure of namespaces can be applied.

First, an operation for a file directory existing in the normal namespace by a network file system protocol will be described.

The file server 2 presents a normal namespace corresponding to the name and structure of a file directory in the file system 21 to the client computer 1-1 through the section 22.

The client computer 1-1 performs an operation such as reading/writing on a desired file directory existing in the normal namespace presented by the section 22 to the file server 2 by using the network file system protocol.

When the file server 2 accepts the operation for the desired file directory existing in the namespace from the client computer 1-1, the section 24 analyzes an operation for a file directory existing in a namespace corresponding to the received target operation on the basis of the identifier. When the section 24 determines that the operation is an operation for the file directory existing in the normal namespace presented by the section 22, a process on the target operation received from the client computer 1-1 is requested for the section 25.

When the process on the operation is received from the section 24, the section 25 activates the section 211 and, by using the section 211, processes an operation for a file directory existing in the normal namespace received from the client computer 1-1.

As described above, when an operation for a file directory existing in the normal namespace is received from the client computer 1-1, the file server 2 performs a process for the operation for the file directory existing in the normal namespace by using the section 25 and the section 211. Although the above-described process operation is implemented by the normal file server 2, the client computer 1-1 uses the network system protocol but cannot control the section 212, whereby the client computer cannot use the expanded function in the file system 21.

Consequently, the file server 2 in the embodiment includes the section 23 and, by the section 23, a virtual namespace corresponding to the name and structure of the file directory existing in the file system 21 is presented to the client computer 1-1. When the operations for file directories in the presented virtual namespace are received, by converting the received operations to the operations for file directories that can be used by the section 212, the section 212 in the file server 2 becomes useful, and the expanded functions in the file system 21 can be used.

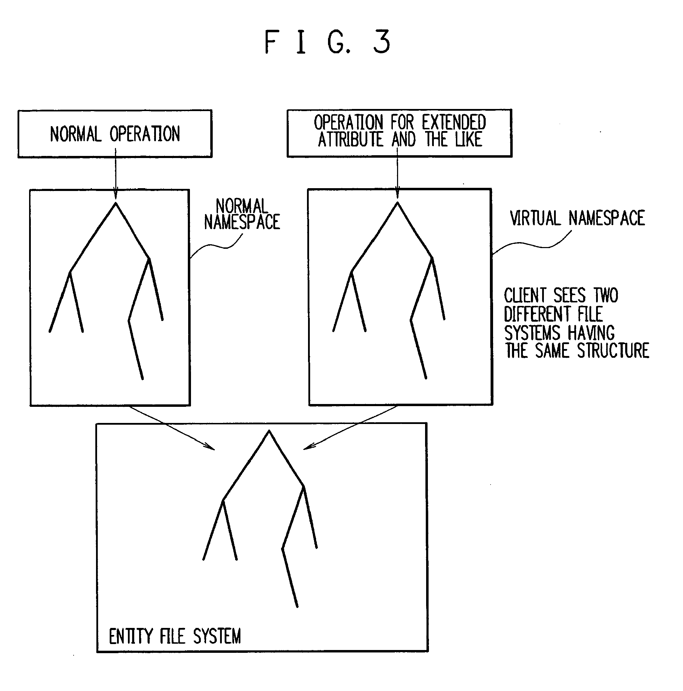

It is satisfactory that a virtual namespace presented to the client computer 1-1 by the section 23 corresponds to the name and structure of a file directory existing in the file system 21. The virtual namespace does not always have to be the same as a normal namespace presented by the section 22 to the client computer 1-1. In the process operation in the embodiment, it is assumed that the normal namespace presented by the section 22 to the client computer 1-1 and the virtual namespace presented by the section 23 to the client computer 1-1 are namespaces having almost the same structure as shown in FIG. 3.

The virtual namespace presented by the section 23 to the client computer 1-1 is seen as an independent file system from the side of the client computers 1-1 to 1-N. Consequently, as shown in FIG. 3, although there is one entity file system in the file server 2, it can be seen from the client computer 1-1 side that two different file systems having the same structure exist.

An operation for a file directory existing in a virtual namespace presented by the section 23 to the client computer 1-1 can be performed by using the network file system protocol like an operation for a file directory existing in a normal namespace presented by the section 22 to the client computer 1-1.

In the file server 2, when an operation for file directory existing in a namespace is received from the client computer 1-1, the section 24 analyzes an operation for a file directory existing in a namespace corresponding to the received target operation based on the identifier. When the section 24 determines that the target operation is an operation for a file directory existing in a virtual namespace presented by the section 23, a request for processing the target operation received from the client computer 1-1 is sent to the section 26.

When the process for the operation for the file directory existing in the virtual namespace is received from the section 24, the section 26 gives the received operation for the file directory existing in the virtual namespace to the section 27.

When the operation on the file directory existing in the virtual namespace received from the section 26 is received, the section 27 activates the section 212. The operation for the file directory existing in the virtual namespace is converted to the operation for the file directory that can be used by the section 212. The converted operation for the file directory is processed by using the section 212.

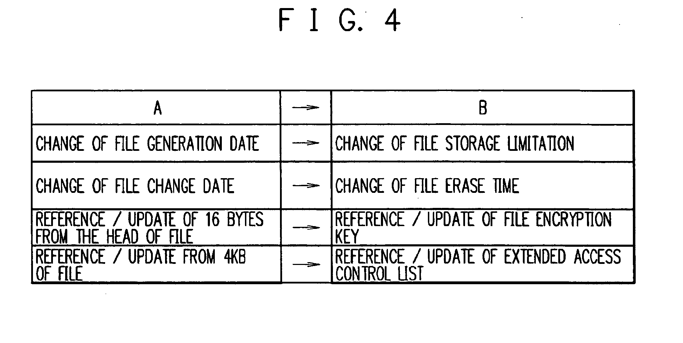

FIG. 4 shows an example of various implementing methods in the section 27.

In the example of FIG. 4, an operation (A in FIG. 4) for a file directory existing in the virtual namespace received from the section 26 is converted to an operation (B in FIG. 4) for a file directory that can be used by the section 212. An operation for a general attribute of a file is converted to an operation for an extended attribute of the file system 21. A generating reading/writing operation is converted to an operation for an extended attribute operation or an operation in an extension access control list.

As described above, the section 23 is provided in the file server 2. By the section 23, a virtual namespace corresponding to the name and structure of a file directory existing in the file system 21 is presented to the client computer 1-1. When an operation for a file directory in the present virtual namespace is received, the received operation for the file directory in the virtual namespace is converted to an operation for a file directory that can be used by the section 212. It enables the client computer 1-1 to use the section 212 in the file system 21.

In the file operation control system in the embodiment, without exerting any influence in structure and meaning on an operation for a file directory existing in a normal name space performed by the section 22, the section 25, and the section 211, the client computers 1-1 to 1-N can use the section 212 in the file system 21.

By the section 23 provided in the file server 2, a virtual namespace corresponding to the name and structure of a file directory existing in the file system is presented to the client computer 1-1. When an operation for a file directory in the presented virtual namespace is received, the received operation for the file directory in the virtual namespace is converted to an operation for a file direction that can be used by the section 212, and the client computer 1-1 uses the section 212 in the file system 21. With the configuration, by using an existing network file system protocol, the client computer 1-1 can use the section 212 in the file system 21. Thus, without performing a special function extension on the client computer 1-ln, the section 212 in the file system 21 can be used.

### Second Embodiment

A second embodiment will now be described.

In the file operation control system in the first embodiment, the structure of the file system 21 is directly reflected in a virtual namespace presented to the client computer 1-1 by the section 23 as shown in FIG. 3 like the normal namespace. The file operation control system in the second embodiment is characterized in that a virtual namespace presented by the section 23 to the client computer 1-1 is configured so as to show only a file or directory on which extending operations can be performed, or a file name is assigned to each file or each attribute of a directory. In such a manner, a virtual namespace presented to the client computer 1-1 can be presented in various states.

A virtual namespace can be also stored in, not a different space, but in part of a normal namespace, for example, below a directory of specific name.

The foregoing embodiments are preferred embodiments of the present invention. The scope of the present invention is not limited by the embodiments but can be variously modified without departing from the gist of the present invention.

For example, in the converting operation shown in FIG. 4, an operation for a general attribute of a file is converted to an operation for an extended attribute of the file system 21, and a general reading/writing operation is converted to an extended attribute operation or an operation of an extension access control list. The converting operations shown in FIG. 4 are an example. Conversion rules for performing various converting operations may be added.

The control operation in the file server 2 as a component of the file operation control system of the foregoing embodiment can be also executed by software such as a computer program, not hardware. The control operation can be also executed in the file server 2 by recording the program on a recording medium such as an optical recording medium, a magnetic recording medium, a magnetooptic recording medium, or a semiconductor recording medium, and allowing the file server 2 to read the program from the recording medium. Alternatively, by making the file server 2 read the program from an external device connected via a predetermined network, the control operation can be executed in the file server 2.

The file operation control device, the file operation control system, the file operation control method, and the file operation control program according to the present invention can be applied to function extension of a file server in a network and the like.

While the invention has been particularly shown and described with reference to exemplary embodiments thereof, the invention is not limited to these embodiments. It will be understood by those of ordinary skill in the art that various changes in form and details may be made therein without departing from the spirit and scope of the present invention as defined by the claims.

## Claims

1. A file operation control device for controlling an operation performed when a client computer uses an extended function existing in a file system via a network, comprising:
a virtual namespace presenting section that presents, as a virtual namespace, an operation for an extended function existing in the file system to the client computer;
a file system operation receiving section that receives an operation existing in the virtual namespace presented by the virtual namespace presenting section from the client computer;
a file system extension operation converting section that converts the operation existing in the virtual namespace received from the file system operation receiving section to the operation for the extended function; and
a file system extension operating section that performs a process on the operation for the extended function converted by the file system extension operation converting section.

2. The file operation control device according to claim 1, further comprising:
a normal namespace presenting section that presents, as a normal namespace, an operation for a normal function existing in the file system to the client computer; and
a file system general operation section that processes an operation existing in the normal namespace presented by the normal namespace presenting section
wherein the file system operation receiving section receives an operation existing in the normal namespace presented by the normal namespace presenting section to the client computer, and
the file system general operation section performs a process on the operation existing in the normal namespace received by the file system operation receiving section.

3. The file operation control device according to claim 2, further comprising:
a virtual namespace operating section that receives an operation existing in a virtual namespace; and
a normal namespace operating section that receives an operation existing in a normal namespace,
wherein when an operation received from the client computer is determined as an operation existing in the virtual namespace presented by the virtual namespace presenting section, the file system operation receiving section assigns the received operation to the virtual namespace operating section, and
when the operation received from the client computer is determined as an operation existing in the normal namespace presented by the normal namespace presenting section, the file system operation receiving section assigns the received operation to the normal namespace operating section.

4. The file operation control device according to claim 3, wherein the file system operation receiving section determines that an operation received from the client computer is either an operation existing in a virtual namespace or an operation existing in a normal namespace based on an identifier.

5. A file operation control system where at least one client computer is connected via a network to a file operation control device for controlling an operation performed when the client computer uses an extended function existing in a file system, wherein
the file operation control device comprises:
a virtual namespace presenting section that presents, as a virtual namespace, an operation for an extended function existing in the file system to the client computer;
a file system operation receiving section that receives an operation existing in the virtual namespace presented by the virtual namespace presenting section from the client computer;
a file system extension operation converting section that converts the operation existing in the virtual namespace received by the file system operation receiving section to an operation for the extended function; and
a file system extension operating section that performs a process on the operation for the extended function converted by the file system extension operation converting section.

6. The file operation control system according to claim 5, wherein the file operation control device further comprises:
a normal namespace presenting section that presents, as a normal namespace, an operation for a normal function existing in the file system to the client computer; and
a file system general operation section that performs a process on an operation existing in the normal namespace presented by the normal namespace presenting section,
the file system operation receiving section receives an operation existing in the normal namespace presented by the normal namespace presenting section to the client computer, and
the file system general operation section performs a process on the operation existing in the normal namespace received by the file system operation receiving section.

7. The file operation control system according to claim 6, wherein the file operation control device further comprises:
a virtual namespace operating section that receives an operation existing in a virtual names pace; and
a normal namespace operating section that receives an operation existing in a normal namespace,
when an operation received from the client computer is determined as an operation existing in a virtual namespace presented by the virtual namespace presenting section, the file operation control device assigns the received operation to the virtual namespace operating section, and
when the operation received from the client computer is determined as an operation existing in the normal namespace presented by the normal namespace presenting section, the file operation control device assigns the received operation to the normal namespace operating section.

8. The file operation control system according to claim 7, wherein the file operation control device determines that an operation received from the client computer is either an operation existing in a virtual namespace or an operation existing in a normal namespace based on an identifier.

9. A file operation control method in a file operation control device for controlling an operation performed when a client computer uses an extended function existing in a file system via a network, comprising:
a virtual namespace presenting step of presenting, as a virtual namespace, an operation for an extended function existing in the file system to the client computer;
a file system operation receiving step of receiving an operation existing in the virtual namespace presented in the virtual namespace presenting step from the client computer;
a file system extension operation converting step of converting the operation existing in the virtual namespace received in the file system operation receiving step to the operation for the extended function; and
a file system extension operating step of performing a process on the operation for the extended function converted in the file system extension operation converting step.

10. The file operation control method according to claim 9, wherein the file operation control device performs:
a normal namespace presenting step of presenting, as a normal namespace, an operation for a normal function existing in the file system to the client computer; and
a file system general operation step of performing a process on an operation existing in the normal namespace presented in the normal namespace presenting step,
in the file system operation receiving step, an operation existing in the normal namespace presented to the client computer in the normal namespace presenting step is received, and
in the file system general operation step, a process on the operation existing in the normal namespace received in the file system operation receiving step is performed.

11. The file operation control method according to claim 10, wherein the file operation control device performs:
a virtual namespace operating step of receiving an operation existing in a virtual namespace; and
a normal namespace operating step of receiving an operation existing in a normal namespace,
in the file system operation receiving step, when an operation received from the client computer is determined as an operation existing in a virtual namespace presented in the virtual namespace presenting step, an operation existing in a virtual namespace is received in the virtual namespace operating step, and
when the operation received from the client computer is determined as an operation existing in the normal namespace presented in the normal namespace presenting step, an operation existing in a normal namespace is received in the normal namespace operating step.

12. The file operation control method according to claim 11, wherein in the file system operation receiving step, an operation received from the client computer is determined as either an operation existing in a virtual namespace or an operation existing in a normal namespace based on an identifier.

13. A computer program for a file operation control device to control an operation performed when a client computer uses an extended function existing in a file system via a network,
the program causing the file operation control device to perform
a virtual namespace presenting process for presenting, as a virtual namespace, an operation for an extended function existing in the file system to the client computer;
a file system operation receiving process for receiving an operation existing in the virtual namespace presented by the virtual namespace presenting process from the client computer;
a file system extension operation converting process for converting the operation existing in the virtual namespace received by the file system operation receiving process to the operation for the extended function; and
a file system extension operating process for performing a process on the operation for the extended function converted by the file system extension operation converting process.

14. The computer program according to claim 13, causing the file operation control device to perform:
a normal namespace presenting process of presenting, as a normal namespace, an operation for a normal function existing in the file system to the client computer; and
a file system general operation process of performing a process on an operation existing in the normal namespace presented by the normal namespace presenting process,
in the file system operation receiving process, an operation existing in the normal namespace presented by the normal namespace presenting process to the client computer is received, and
in the file system general operation process, a process on the operation existing in the normal namespace received by the file system operation receiving process is performed.

15. The computer program according to claim 14, causing the file operation control device to perform:
a virtual namespace operating process of receiving an operation existing in a virtual namespace; and
a normal namespace operating process of receiving an operation existing in a normal namespace,
in the file system operation receiving process, when an operation received from the client computer is determined as an operation existing in a virtual namespace presented in the virtual namespace presenting process, an operation existing in the virtual namespace is received by the virtual namespace operating process, and
when the operation received from the client computer is determined as an operation existing in the normal namespace presented by the normal namespace presenting process, an operation existing in the normal namespace is received by the normal namespace operating process.

16. The computer program according to claim 15, wherein in the file system operation receiving process, an operation received from the client computer is determined as either an operation existing in a virtual namespace or an operation existing in a normal namespace based on an identifier.
